# EUROPÄISCHE PATENTANMELDUNG

(11) **EP 1 657 089 A2**
(43) Veröffentlichungstag der Anmeldung: **17.05.2006**
(21) Anmeldenummer: 05024151.2
(22) Anmeldetag: 04.11.2005
(51) Int. Cl.: B60H 1/00

(54) **Steuerorgan**

(30) Priorität: 12.11.2004 DE 102004054838
(71) Anmelder: Behr GmbH & Co. KG, 70469 Stuttgart (DE)
(72) Erfinder: Gundel, Holger, 70839 Gerlingen (DE)
(74) Vertreter: Mantel, Berthold Friedrich

(57) **Zusammenfassung**

Die Erfindung betrifft ein Steuerorgan zur Steuerung der Freigabe des Querschnitts zumindest zweier Öffnungen für fluide Medien. Der Strömungsweg der fluiden Medien führt dabei zumindest durch eine dieser Öffnungen. Das Steuerorgan ist um eine Drehachse verstellbar und weist eine Steuerfläche auf, die aus zumindest einem Absperr- und einem Öffnungsbereich besteht. Die Drehachse durchdringt im Wesentlichen im Zentrum der Steuerfläche das Steuerorgan und steht am Durchdringungspunkt senkrecht auf diese, wobei die Steuerfläche in Form einer rotationssymmetrischen Fläche mit einer stetig gekrümmt verlaufenden Kontur ausgeführt ist

## Beschreibung

Die Erfindung betrifft ein Steuerorgan zur Steuerung der Freigabe des Querschnitts zumindest zweier Öffnungen für fluide Medien, gemäß dem Oberbegriff des Anspruchs 1 und eine Luftverteilungsvorrichtung, sowie eine Klimatisierungs-, Heizungs- und/ oder Belüftungsanlage, insbesondere für Kraftfahrzeuge.

Vorrichtungen zur Luftmengensteuerung und Luftverteilung bzw. zur Einstellung von Volumenstromverhältnissen getrennt strömender oder zuzuführender fluider Medien weisen in der Regel Steuerorgane, beispielsweise in Form von Klappen auf, die entweder drehbar oder translatorisch verschiebbar gelagert sind.

Als Beispiel für eine solche Klappe ist aus der deutschen Patentschrift DE 42 28 866 eine Absperrvorrichtung mit einer viertelkugelförmigen Klappe bekannt, die wahlweise einen ersten und einen zweiten Zuströmkanal öffnet oder verschließt. Die Drehachse an der die Klappe hierfür gelagert ist verläuft durch die beiden Schnittpunkte die von den begrenzenden Halbkreisbögen der Viertelkugel gebildet werden. Für die vorgeschlagene Absperrvorrichtung wird die Bauraumhöhe durch den Radius der Klappe festgelegt.

Eine Vorrichtung zur Luftmengensteuerung und Luftverteilung in Heizungs- und Klimageräten mit geringerer Bauhöhe ist in der Druckschrift DE 197 57 194 offenbart. Die Vorrichtung zur Luftmengensteuerung weist ein scheibenförmiges Stellelement mit einer Öffnung auf, das um eine Drehachse gedreht werden kann, wobei die Drehachse parallel zur Richtung eines abzuteilenden Luftstroms angeordnet ist. Durch die Scheibenform ist es jedoch erforderlich beispielsweise mittels Federn für einen kraftschlüssigen Kontakt zwischen Rahmen und Stellelement zu sorgen um ein Vibrieren und eine damit verbundene Geräuschentwicklung zu unterbinden.

Es ist Aufgabe der Erfindung, eine einfach aufgebaute, geringe Bauhöhe beanspruchende und stabile oder verwindungssteife Vorrichtung zur Steue rung der Freigabe des Querschnitts zumindest zweier Öffnungen für fluide Medien beziehungsweise Strömungskanäle zur Verfügung zu stellen.

Diese Aufgabe wird gelöst durch ein Steuerorgan mit den Merkmalen des Anspruchs 1. Vorteilhafte Ausgestaltungen sind Gegenstand der Unteransprüche.

Erfindungsgemäß ist ein Steuerorgan zur Steuerung der Freigabe des Querschnitts zumindest zweier Öffnungen für fluide Medien vorgesehen. Der Strömungsweg der fluiden Medien führt dabei durch diese Öffnungen. Das Steuerorgan ist um eine Drehachse verstellbar und weist eine Steuerfläche auf, die aus zumindest einem Absperr- und einem Öffnungsbereich besteht. Die Drehachse durchdringt im Wesentlichen im Zentrum der Steuerfläche das Steuerorgan und steht am Durchdringungspunkt senkrecht auf diese, wobei die Steuerfläche in Form einer rotationssymmetrischen Fläche mit einer stetig gekrümmt verlaufenden Kontur ausgeführt ist. Im Sinne der Erfindung ist unter der Kontur der Steuerfläche die Kurve zu verstehen, die sich in einer Seitenansicht also in Projektion senkrecht zur Drehachse ergibt.

Das Steuerorgan weist in Richtung der Drehachse betrachtet eine Höhe H und quer zur Drehachse eine Ausdehnung A auf. Vorteilhafterweise, insbesondere um der Anforderung an einen geringen Bauraum gerecht zu werden ist das Verhältnis aus Höhe H zu Ausdehnung A kleiner als 0,5 und größer als 0 oder 0,05, bevorzugt kleiner als 0,25 und größer als 0 oder 0,05 und besonders bevorzugt kleiner als 0,15, insbesondere kleiner als 0,1 und größer als 0 oder 0,05.

Bevorzugt ist die Steuerfläche in Form einer Kugelkappe ausgeführt, wobei auch andere, gemäß dem kennzeichnenden Teil des Anspruchs 1, rotationssymmetrische Flächen, deren Kontur eine stetige Krümmung aufweist, wie beispielsweise allgemein bogenförmige Profile, denkbar sind.

Insbesondere für eine kugelkappenförmige Ausbildung des Steuerorgans mit einem Krümmungsradius R das Verhältnis aus Höhe (H) zu Radius (R) kleiner als 1, bevorzugt kleiner als 0,5 und größer als 0 und besonders bevorzugt kleiner als 0,2 insbesondere kleiner als 0,15 und größer als 0.

Vorteilhafterweise ist zumindest ein Öffnungsbereich der Steuerfläche mit zumindest einer Ausnehmung ausgeführt, wobei die Ausnehmung in ihrer Draufsicht längs der Drehachse beispielsweise kreissektorförmig ausgebildet ist. Diese Ausnehmung kann aber auch beliebige andere Formen aufweisen um einen gezielten Öffnungs- und/oder Schließverlauf festzulegen.

Ein weiterer Gegenstand der Erfindung ist eine Luftverteilungsvorrichtung, welche ein Steuerorgan zur Steuerung der Freigabe des Querschnitts zumindest zweier Öffnungen für fluide Medien gemäß obiger Beschreibung und ein Gehäuse, insbesondere zur Integration eines Gebläses aufweist. Im Gehäuse sind zumindest zwei Bereiche zur Einströmung von Luft vorgesehen deren Eintrittsquerschnitte mittels des Steuerorgans steuerbar ist.

Bevorzugt schließt sich an zumindest einen Eintrittsquerschnitt der Luftverteilungsvorrichtung ein Strömungskanal an, wobei selbstverständlich auch an mehreren Eintrittsquerschnitten, insbesondere an das Gehäuse anschließend, Strömungskanäle angeordnet sein können. Die Drehachse des Steuerorgans kann dabei benachbart einem Rand eines solchen Strömungskanals angeordnet sein. Insbesondere die Anordnung des Steuerorgans in der Luftverteilungsvorrichtung so vorgesehen, dass das Steuerorgan zumindest einen Strömungskanal in einer ersten Endposition vollständig verschließt, in einer zweiten Endposition vollständig öffnet und in zwischengelagerten Positionen teilweise freigibt.

In weiterer erfindungsgemäßer Ausgestaltung der Luftverteilungsvorrichtung ist ein Strömungskanal ein Frischluft- oder Außenluftkanal und/oder ein Strömungskanal ein Umluftkanal, wobei insbesondere für den Einsatz der Luftverteilungsvorrichtung in einer Klimatisierungs-, Heizungs und/oder Belüftungsanlage eines Kraftfahrzeugs, der Umluftkanal einen Strömungskanal für aus dem Fahrzeuginnenraum und der Frischluftkanal einen Strömungskanal für aus dem Außenbereich des Fahrzeugs stammende Luft bildet.

Vorteilhafterweise verschließt das Steuerorgan den Öffnungsquerschnitt für einen ersten Luftstrom in einer ersten Endposition vollständig und öffnet dabei gleichzeitig den Öffnungsquerschnitt für einen zweiten Luftstrom vollständig. In einer zweiten Endposition öffnet das Steuerorgan den Öffnungsquerschnitt für den ersten Luftstrom vollständig und verschließt gleichzeitig den Öffnungsquerschnitt für den zweiten Luftstrom vollständig. In zwischengelagerten Positionen gibt das Steuerorgan beide Öffnungsquerschnitte teilweise frei. Insbesondere ist als erster Luftstrom ein Frischluftstrom und/oder als zweiter Luftstrom ein Umluftstrem vorgesehen. In den Ansaugbereich des Gebläses kann damit wahlweise nur Frischluft, nur Umluft oder eine Mischung aus Frisch- und Umluft eintreten, wobei das Mischungsverhältnis abhängig von der Stellung des Steuerorgans ist.

Das Steuerorgan steuert bevorzugt das Volumenstromverhältnis zwischen einem Frischluft- und einem Umluftstrom, die in den Ansaugbereich des Gebläses, insbesondere einer Klimatisierungs-, Heizungs- und/ oder Belüftungsanlage eines Kraftfahrzeugs eintreten.

Bevorzugt ist die erfindungsgemäße Luftverteilungsvorrichtung so ausgestaltet, dass das Steuerorgan im Ansaugbereich eines Gebläses angeordnet ist. Dem Steuerorgan ist im Strömungsweg insbesondere ein Filter vor- und/oder nachgeordnet.

Ein weiterer Gegenstand der Erfindung ist eine Klimatisierungs-, Heizungsund/ oder Belüftungseinrichtung, insbesondere für Kraflfahrzeuge, welche ein erfindungsgemäßes Steuerorgan und/oder eine erfindungsgemäße Luftverteilungsvorrichtung aufweist. Bevorzugt umfasst die Klimatisierungs-, Heizungs- und/ oder Belüftungseinrichtung zumindest eines der folgenden Bauteile: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand eines Ausführungsbeispiels unter Bezugnahme auf die Zeichnung im Einzelnen erläutert. Es zeigen.
- Fig. 1: eine perspektivische Ansicht einer erfindungsgemäßen Luftverteilungsvorrichtung mit einem erfindungsgemäßen Steuerorgan,
- Fig. 2: einen Ausschnitt der Luftverteilungsvorrichtung und des Steuerorgans von Fig. 1, in einer Draufsicht,
- Fig. 3: eine Seitenansicht des Steuerorgans von Fig.1 mit einem Teil eines Luftkanals,
- Fig. 4a bis 4b: Steuerorgan von Fig.1 in vier verschiedenen Stellungen,
- Fig. 5: eine perspektivische Ansicht einer erfindungsgemäßen Luftverteilungsvorrichtung mit einem Filter und
- Fig. 6: ein schematisches Schnittbild einer erfindungsgemäßen Klimatisierungseinrichtung.

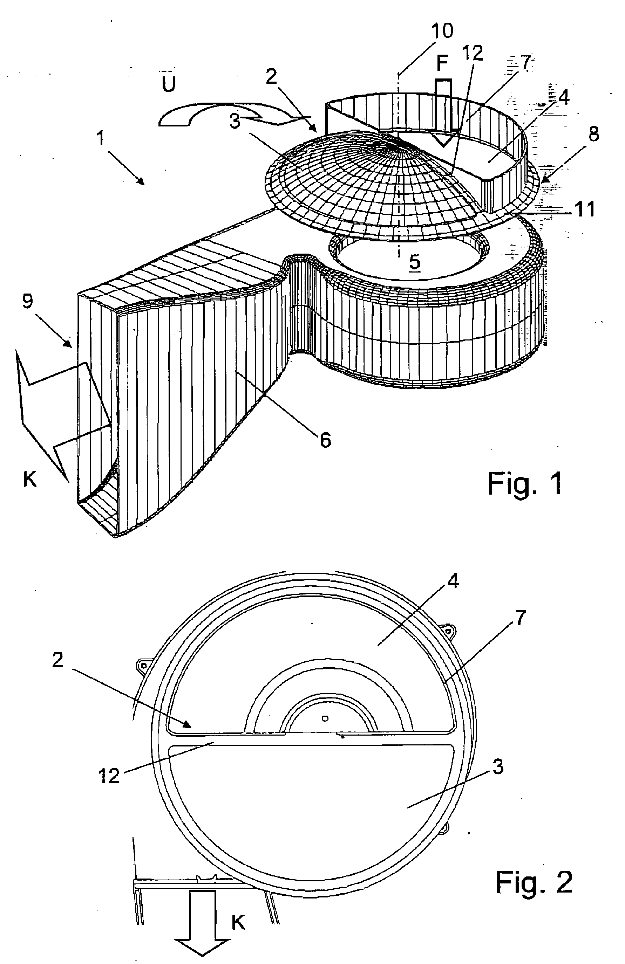

In Fig.1 ist eine perspektivische Ansicht einer erfindungsgemäßen Luftverteilungsvorrichtung 1 mit einem erfindungsgemäßen Steuerorgan 2 einer Kraftfahrzeug-Klimaanlage dargestellt. Das Steuerorgan 2 ist oberhalb des Gehäuses 6, das zur Aufnahme eines Gebläses und der Luftführung in einer Klimatisierungseinrichtung, insbesondere eines Kraftfahrzeuges, dient, angeordnet. Die Darstellung zeigt das Steuerorgan 2 in einer vom Gehäuse 6 abgehobenen Position.

Das Steuerorgan 2 wird im Wesentlichen durch eine Steuerfläche gebildet, die aus einem Absperrbereich 3 und einem Öffnungsbereich 4 besteht. Die Steuerfläche ist im gezeigten Beispiel als sphärische Fläche ausgeführt, wobei der Öffnungsbereich 4 als eine kugelsektorförmige Ausnehmung in der Steuerfläche gestaltet ist. Der Abbildung ist deutlich zu entnehmen dass die Steuerfläche und damit auch das Steuerorgan 2 die Form einer Kugelkappe oder einer Kalotte zeigt, mit einer wesentlich flachbauenderen Form als beispielsweise bei einer viertel- oder halbkugelförmigen Steuereinrichtung mit gleichem Krümmungsradius.

Das Steuerorgan 2 ist um eine Drehachse 10 drehbar gelagert, wobei die Drehachse 10 im Wesentlichen in Richtung eines durch einen Pfeil symbolisierten Frischluftstroms F angeordnet ist. Dieser Frischluftstrom F gelangt über den Außenraum eines Fahrzeugs, beispielsweise über nicht dargestellte Kanäle, in den Frischluftkanal 7 des oberen Gehäuseteils 8. In der gezeigten Stellung in Fig. 1 lässt das Steuerorgan 2, diesen Frischluftstrom F durch eine Öffnung in den Ansaugbereich 5 des Gebläses passieren. Das Steuerorgan 2 befindet sich also hinsichtlich des Frischluftkanals in einer geöffneten Stellung. Gleichzeitig besteht die Möglichkeit, einen Umluftstrom U, in Fig. 1 ebenfalls durch einen Pfeil symbolisiert, über eine Öffnung dem Ansaugbereich 5 des Gebläses zuzuführen. Für den Umluftstrom U ist in der dargestellten Anordnung keine gesonderte Zuführung durch einen Kanal vorgesehen. Die Umluft kann vielmehr aus der Umgebung des Gehäuses 6 in den Ansaugbereich des Gebläses eintreten. In der in Fig.1 dargestellten Stellung ist durch den Absperrbereich 6 des Steuerorgans 2 der Weg für den Umluftstrom U in den Ansaugbereich 5 des Gebläses verschlossen.

Vom Gebläse kann also, in der in Fig. 1 dargestellten Stellung des Steuerorgans 2, ausschließlich Frischluft F angesaugt werden und der Klimatisierungseinrichtung 20 über den Anschluss 9 als Zuluftstrom oder zu klimatisierender Luftstrom K zur Verfügung gestellt werden. Mittels des Steuerorgans 2 wird also die Freigabe des Querschnitts einer Öffnung für eine Frischluftstrom F und einer Öffnung für einen Umluftstrom U gesteuert. Es sei nochmals erwähnt, dass die gewählte Darstellung in Fig. 1 eine Art Explosions- zeichnung darstellt um den Eingangsbereich oder den Ansaugbereich des Gebläses oder der Gebläsespirale besser hervorzuheben. Für die beschriebene Wirkweise des Steuerorgans liegt der Gehäuseteil 8 natürlich am unteren Gehäuse 6 auf.

Das im Bereich der Drehachse 10 gelagerte Steuerorgan 2 wird in dem oberen Gehäuseteil 8 geführt, wobei dieses Gehäuseteil 8 aus einem ringförmigen Teil 11 und einem zur Aufnahme der Lagerung der Drehachse 10 des Steuerorgans 2 dienenden Steges 12, der bogenförmig über dem ringförmigen Teil 11 verläuft, besteht. Das Gehäuseteil 8 ist in seiner Kontur an das Steuerorgan 2 beziehungsweise an dessen Steuerfläche angepasst. Zur Abdichtung können an dem Gehäuseteil 8 oder an dem Steuerorgan 2 Dichtmittel, wie beispielsweise Dichtlippen, vorgesehen sein.

In Fig. 2 ist die in Fig. 1 beschriebene Anordnung zur Verdeutlichung in einer Draufsicht dargestellt. Die durch den Öffnungsbereich 4 freigegebene Öffnung im Frischluftkanal, lässt Teile der Gebläsespirale bzw. des Gebläses in angedeuteten halbkreisförmigen Ringen erkennen. Der Eintritt für Umluft U in den Ansaugbereich 5 des Gebläses, ist durch den Absperrbereich 3 des Steuerorgans 2 verschlossen.

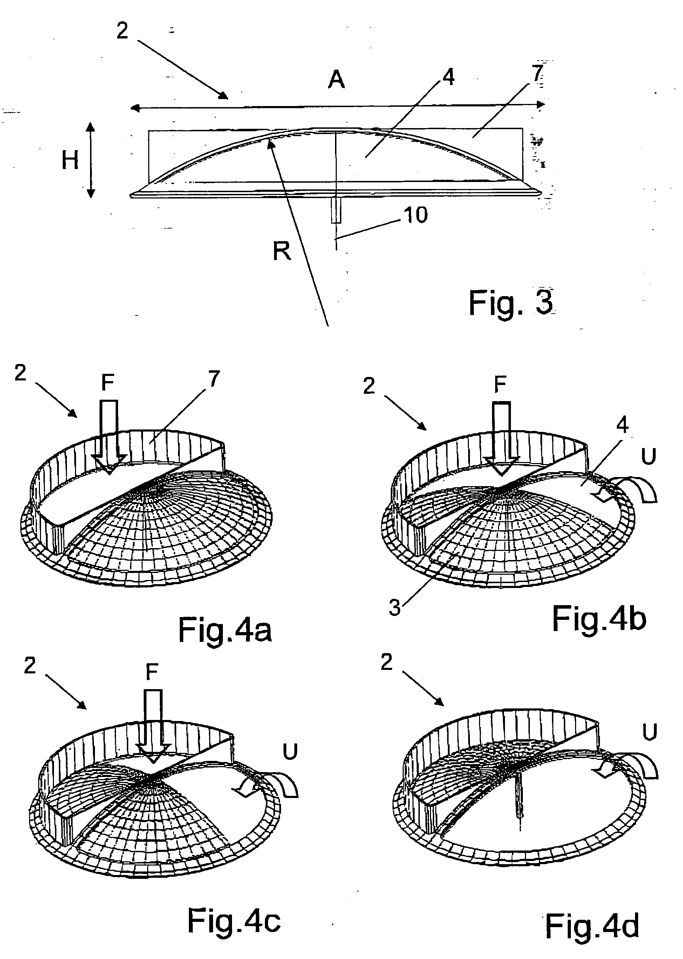

Eine Seitenansicht des Steuerorgans 2, mit Blickrichtung auf den Öffnungsbereich 4 ist in Fig. 3 dargestellt. Die Kontur der Steuerfläche folgt einem Teil eines Kreisbogens, ist also eine stetig gekrümmte Kurve, wodurch sich ein einfacher geometrischer Aufbau des Steuerorgans 2 ergibt. Als Konturen sind auch weitere beliebig stetig gekrümmte bogenförmige Kurven denkbar. Auf Grund des im Ausführungsbeispiel gewählten Verhältnisses zwischen Höhe H des Steuerorgans 2 und der Längsausdehnung A von etwa 0,18 bzw. des Verhältnisses von Höhe H zu Krümmungsradius R von etwa 0,15. ergibt sich eine niedrige Bauhöhe, bei einem relativ großen Öffnungsquerschnitt. Durch die Form einer Kugelkappe ist das Steuerorgan 2, beispiels- weise im Vergleich zu einer scheibenförmigen Klappe verwindungssteifer und stabiler. Dies vermindert unter anderem ein eventuell störendes Flattergeräusch beziehungsweise Vibrationen des Steuerorgans. Die Ausnehmung im Öffnungsbereich 4 ist als Kugelsektor oder -segment ausgeführt, kann aber davon abweichend, in ihrer Form gezielt auf ein zu wählendes Steuer-verhalten angepasst werden.

Unterschiedliche Stellungen des Steuerorgans 2 sind in den Figüren 4a bis 4d dargestellt. In Fig. 4a ist das Steuerorgan in einer ersten Endposition gezeigt, in der, der Frischluftkanal 7 durch den Öffnungsbereich 4 des Steuerorgans 2 vollständig freigegeben ist und der Öffnungsquerschnitt für den Umluftstrom vollständig geschlossen ist. Bei einer Drehung des Steuerorgans 2 aus dieser Stellung heraus, öffnet sich der Eintrittsbereich für den Umluftstrom U und der Querschnitt für den Eintritt von Frischluft F wird verkleinert, wie in den Figuren 4b und 4c gezeigt, bis schließlich das Steuerorgan 2, gemäß Fig. 4d eine zweite Endposition erreicht, in der sie den Frischluftkanal vollständig verschließt und den Umluftkanal vollständig freigibt. Das Mischungsverhältnis zwischen Frischluft F und Umluft U, das in den Ansaugbereich des Gebläses gelangen kann, ist somit von der Stellung des Steuerorgans 2 abhängig.

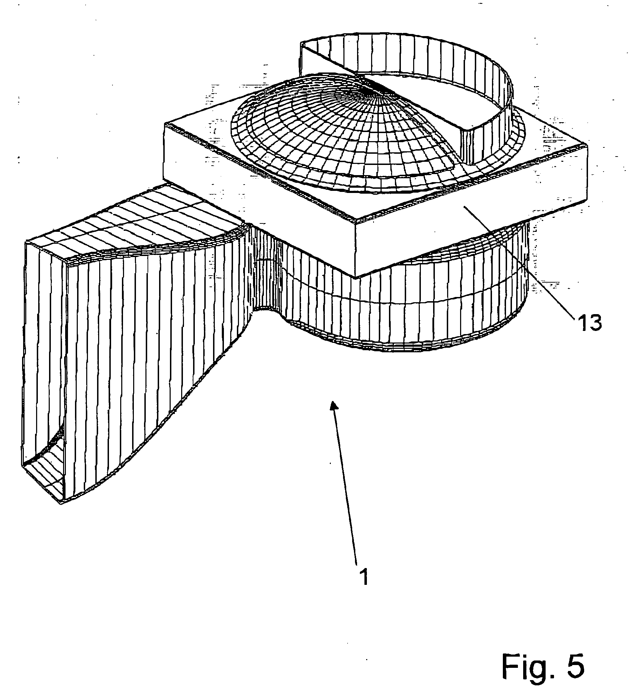

In einer weiteren, in Fig. 5 dargestellten Ausführungsform der Luftverteilungsvorrichtung, ist zwischen dem Gehäuseteil 8 und damit auch dem Steuerorgan 2 und dem Gehäuse 6 ein Filter 13, insbesondere ein Luftfilter angeordnet.

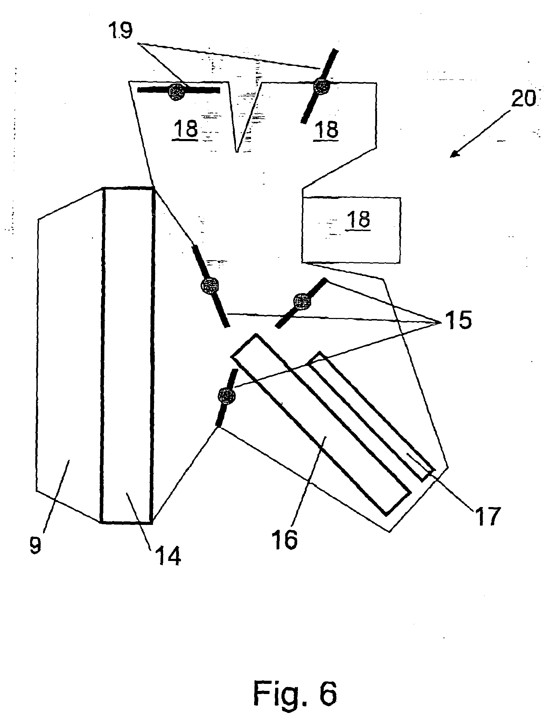

Fig. 6 zeigt schematisch einen Schnitt durch eine erfindungsgemäße Klimatisierungseinrichtung 20, wobei die Luftverteilungseinrichtung 1 bei der gewählten Darstellung von Dem Gehäuse der Klimatisierungseinrichtung 20 verdeckt ist. Über den Anschluss 9 ist die Luftverteilungsvorrichtung 1 mit der Klimatisierungseinrichtung 20 verbunden. Die, mittels des Steuerorgans 2, gewählte Mischung aus Frischluft und Umluft tritt über den Anschluss 9 in die Klimatisierungseinrichtung 20 ein, wobei sie mittels eines Verdampfers 14 gekühlt wird. Über eine oder mehrere Mischklappen 15 und einen Heizkörper 16 beziehungsweise einem optionalen Zusatzheizgerät 17, beispielsweise einem PTC-Zusatzheizer wird die Luft temperiert, bevor sie über verschiedene Ausgänge 18, deren Öffnungsquerschnitt mittels weiterer Klappen 19 variiert werden kann, in den Fahrzeuginnenraum gelangt. Über die Ausgänge 18 können beispielsweise ein Fußraum-, ein Defrost- oder ein Mitteldüsenbelüftungsbereich versorgt werden.

Die dargestellte Anwendung eines erfindungsgemäßen Steuerorgans 2 als Steuerorgan 2 zur Beeinflussung des Mischungsverhältnisses von Frischluft F und Umluft U ist nur beispielhaft zu verstehen. Genauso könnten unterschiedlich temperierte oder konditionierte Luftströme in ihrem Verhältnis zueinander abgestimmt werden. Generell ist man dabei nicht aüf zwei Ströme beschränkt, da das Steuerorgan 2 auch mit mehreren Öffnungs- 4 beziehungsweise Absperrbereichen 3 versehen sein kann.

## Patentansprüche

1. Steuerorgan (2) zur Steuerung der Freigabe des Querschnitts zumindest zweier Öffnungen für fluide Medien, deren Strömungsweg durch zumindest eine dieser Öffnungen führt, wobei das Steuerorgan (2) um eine Drehachse (10) verstellbar ist und eine Steuerfläche aufweist, die aus zumindest einem Absperr- (3) und einem Öffnungsbereich (4) besteht, **dadurch gekennzeichnet, dass** die Drehachse (10) im Wesentlichen im Zentrum der Steuerfläche und senkrecht auf dieser stehend, das Steuerorgan (2) durchdringt und die Steuerfläche in Form einer rotationssymmetrischen Fläche mit einer stetig gekrümmt verlaufenden Kontur ausgeführt ist.

2. Steuerorgan nach Anspruch 1, **dadurch gekennzeichnet, dass** das Steuerorgan in Richtung der Drehachse (10) eine Höhe (H) und quer zur Achse eine Ausdehnung (A) aufweist, wobei das Verhältnis aus Höhe (H) zu Ausdehnung (A) kleiner als 0,5 insbesondere kleiner als 0,25 ist.

3. Steuerorgan nach Anspruch 2, **dadurch gekennzeichnet, dass** das Verhältnis aus Höhe (H) zu Ausdehnung (A) kleiner oder gleich 0,15, insbesondere kleiner als 0,1 ist.

4. Steuerorgan nach einem der vorhergehenden Ansprüche, **dadurch gekennzeichnet, dass** die Steuerfläche in Form einer Kugelkappe mit einem Krümmungsradius R ausgeführt ist.

5. Steuerorgan nach Anspruch 4, **dadurch gekennzeichnet, dass** das Verhältnis aus Höhe (H) zu Radius (R) kleiner als 1, insbesondere kleiner als 0,5 und größer als 0 ist.

6. Steuerorgan nach Anspruch 4, **dadurch gekennzeichnet, dass** das Verhältnis aus Höhe (H) zu Radius (R) kleiner als 0,2 insbesondere kleiner als 0,15 und größer als 0 ist.

7. Steuerorgan nach einem der vorhergehenden Anspruche, **dadurch gekennzeichnet, dass** der zumindest eine Öffnungsbereich (4) der Steuerfläche als zumindest eine Ausnehmung ausgeführt ist.

8. Steuerorgan nach Anspruch 7, **dadurch gekennzeichnet, dass** die Ausnehmung in ihrer Draufsicht längs der Drehachse (10) kreissektorförmig ausgebildet ist.

9. Luftverteilungsvorrichtung (1) mit einem Steuerorgan (2) nach einem der vorhergehenden Ansprüche und einem Gehäuse (6), insbesondere zur Integration eines Gebläses, wobei im Gehäuse (6) zumindest zwei Bereiche zur Einströmung von Luft vorgesehen sind, deren Eintrittsquerschnitte mittels des Steuerorgans (2) steuerbar sind.

10. Luftverteilungsvorrihchtung nach Anspruch 9, **dadurch gekennzeichnet, dass** sich an zumindest einen Eintrittsquerschnitt ein Strömungskanal (7) anschließt.

11. Luftverteilungsvorrichtung nach Anspruch 10, **dadurch gekennzeichnet, dass** die Drehachse (10) des Steuerorgans (2) benachbart einem Rand des zumindest einen Strömungskanals (7) angeordnet ist.

12. Luftverteilungsvorrichtung nach Anspruch 9 oder 10 **dadurch gekennzeichnet, dass** das Steuerorgan (2) den zumindest einen StrömungsKanal (7) in einer ersten Endposition vollständig verschließt, in einer zweiten Endposition vollständig öffnet und in zwischengelagerten Positionen teilweise freigibt.

13. Luftverteilungsvorrichtung nach einem der Ansprüche 10 bis 12 **dadurch gekennzeichnet, dass** der zumindest eine Strömungskanal (7) ein Frischluft- oder Außenluftkanal ist.

14. Luftverteilungsvorrichtung nach einem der Ansprüche 10 bis 13 **dadurch gekennzeichnet, dass** zumindest ein Strömungskanal (7) ein Umluftkanal ist.

15. Luftverteilungsvorrichtung nach einem der Ansprüche 9 bis 14 **dadurch gekennzeichnet, dass** das Steuerorgan (2) den Öffnungsquerschnitt für einen ersten Luftstrom in einer ersten Endposition vollständig verschließt und dabei gleichzeitig den Öffnungsquerschnitt für einen zweiten Luftstrom vollständig öffnet, in einer zweiten Endposition den Öffnungsquerschnitt für den ersten Luftstrom vollständig öffnet und gleichzeitig den Öffnungsquerschnitt für den zweiten Luftstrom vollständig verschließt und in zwischengelagerten Positionen beide Öffnungsquerschnitte teilweise freigibt.

16. Luftverteilungsvorrichtung nach Anspruch 15 **dadurch gekennzeichnet, dass** der erste Luftstrom ein Frischluftstrom (F) und/oder der zweite Luftstrom ein Umluftstrom (U) ist.

17. Luftverteilungsvorrichtung nach einem der Ansprüche 15 bis 16 **dadurch gekennzeichnet, dass** das Steuerorgan (2) das Volumenstromverhältnis zwischen einem Frischluft- (F) und einem Umluftstrom (U), die in den Ansaugbereich des Gebläses eintreten, steuert.

18. Luftverteilungsvorrichtung nach einem der Ansprüche 9 bis 17, **dadurch gekennzeichnet, dass** das Steuerorgan (2) im Ansaugbereich (5) eines Gebläses angeordnet ist.

19. Luftverteilungsvorrichtung nach einem der Ansprüche 9 bis 18, **dadurch gekennzeichnet, dass** vor oder nach dem Steuerorgan (2) im Strömungsweg ein Filter (13) angeordnet ist.

20. Klimatisierungs- (20), Heizungs- und/ oder Belüftungseinrichtung, insbesondere für Kraftfahrzeuge, **dadurch gekennzeichnet, dass** die Klimatisierungs-, Heizungs- und/ oder Belüftungseinrichtung ein Steuerorgan (2) nach mindestens einem der Ansprüche 1 bis 8 und/oder eine Luftverteilungsvorrichtung (1) nach einem der Ansprüche 9 bis 19 aufweist.

21. Klimatisierungs-, Heizungs- und/ oder Belüftungseinrichtung, nach Anspruch 20, **dadurch gekennzeichnet, dass** die Klimatisierungs-, Heizungs- und/ oder Belüftungseinrichtung zumindest eines der folgenden Bauteile umfasst: Wärmetauscher, Heizkörper (16), Verdampfer (14), Filter, Temperaturmischklappe (15), Mischkammer, einen oder mehrere Strömungskanäle und eine oder mehrere Steuerklappen (19) zur Verteilung der Luft auf die Austrittskanäle (18).
